# EUROPÄISCHE PATENTSCHRIFT

(11) **EP 1 160 291 B1**
(45) Veröffentlichungstag und Bekanntmachung des Hinweises auf die Patenterteilung: **27.02.2002**
(21) Anmeldenummer: 00810478.8
(22) Anmeldetag: 30.05.2000
(51) Int. Cl.: C09B 29/30, C09B 43/12, C09D 11/02

(54) **Azofarbstoffe, deren Herstellung und Verwendung**
Azo dyes, their preparation and use thereof
Colorants azoiques, leur préparation et leur utilisation

(43) Veröffentlichungstag der Anmeldung: 05.12.2001
(73) Patentinhaber: ILFORD Imaging Switzerland GmbH, 1723 Marly 1 (CH)
(72) Erfinder: Baettig, Kurt, 1724 Praroman-Le Mouret (CH); Gérald, Jan Dr., 1752 Villars-sur-Glâne (CH)

(56) Entgegenhaltungen:
- EP-A- 0 953 613
- WO-A-96/24636
- CH-A- 359 812
- DE-A- 19 735 769
- US-A- 3 655 388

## Beschreibung

### Technisches Gebiet

Die Erfindung bezieht sich auf neue Monoazofarbstoffe und ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Tinten für den Tintenstrahldruck.

### Stand der Technik

Beim Tintenstrahldruck sind im wesentlichen zwei Verfahren zu unterscheiden: Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden je nachdem, ob eine Bildstelle bedruckt werden soll oder nicht, in einen Auffangbehälter abgelenkt oder auf das Aufnahmematerial aufgebracht. Dies geschieht z. B. dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, indem ungeladene Tröpfchen in den Auffangbehälter abgelenkt werden.
Beim nichtkontinuierlichen Verfahren, dem sogenannten "Drop on demand", werden die Tintentropfen nur dann erzeugt, wenn auf Grund der digitalen Daten ein Bildpunkt dargestellt werden muss.

Im traditionellen Tintenstrahldruck wird das klassische Vierfarbensystem YMCK verwendet, in dem eine gelbe, eine purpurne, eine blaugrüne und eine schwarze Tinte auf das Aufzeichnungsmaterial aufgebracht werden. Der Wunsch zur Verbesserung der Farbwiedergabe führt zur Verwendung zusätzlicher Tinten mit Farben wie beispielsweise Orange, Rot, Blau, Grün usw., den sogenannten Spotfarben, die im traditionellen Vierfarbensystem nur durch Mischen der entsprechenden Primärfarben erzeugt werden können. So erzeugte Spotfarben (Mischfarben) können deshalb nur weniger rein und weniger brillant dargestellt werden. Die neuen, multifarbenen Tintensysteme benötigen deshalb neue brillante, hochlichtechte und in wässrigen Systemen gut lösliche rote Farbstoffe.

Obwohl schon eine ganze Anzahl roter Farbstoffe zur Verwendung im Tintenstrahldruck vorgeschlagen worden sind, vermag noch keiner alle an ihn gestellten Anforderungen zu erfüllen.

Der Farbstoff der Formel (I) (Säurerot 37) mit einem roten Farbton wird in der Patentanmeldung EP 0'953'613 beschrieben.

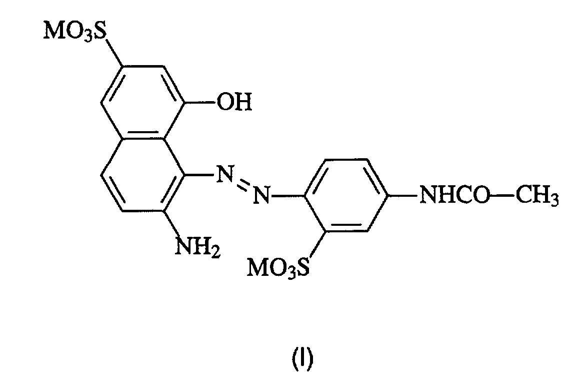

Dieser Farbstoff zeigt den gewünschten Farbton, aber seine Löslichkeit ist nicht ausreichend.

Der Farbstoff der Formel (II) mit einem Purpur-Farbton wird in der Patentanmeldung WO 96-24'636 (Beispiel 102) beschrieben.

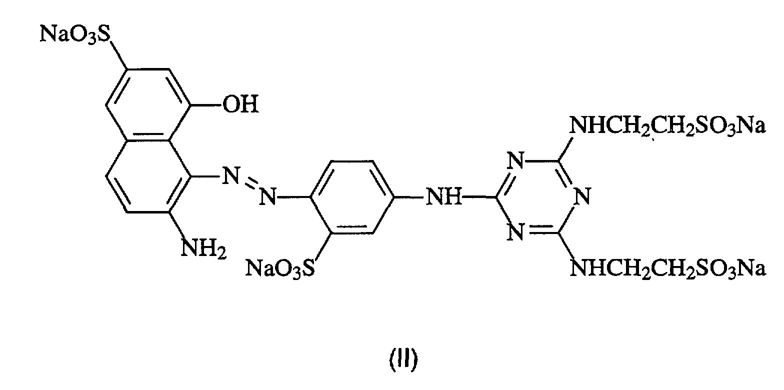

Dieser Farbstoff zeigt eine hohe Löslichkeit, aber sein Farbton ist zu ungesättigt und zu blaustichig.

Diese beiden Farbstoffe des Standes der Technik vermögen in der Praxis als Spotfarbstoffe für den Tintenstrahldruck nicht alle gewünschten Anforderungen zu erfüllen, wenn sie in roten Tinten für den Tintenstrahldruck eingesetzt werden und wenn es darum geht, mit Ihnen Tinten herzustellen, die auf allen möglichen Aufnahmematerialien wie unbeschichtetem oder beschichtetem Papier, beschichtetem oder unbeschichtetem, opakem oder durchsichtigem Kunststoffträger Bilder oder Färbungen mit maximaler Farbwiedergabe (Hoher Gamut) zu erzeugen, weil die Farbstoffe entweder zu schwerlöslich sind oder ein zu blaustichiges Rot aufweisen.

Farbstoffe für solche Tinten müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit und einer guten Lichtechtheit ergeben. Sie müssen in der Tinte stabil sein, auch wenn diese lange Zeit unter ungünstigen Bedingungen gelagert wird.
Verschiedene Zusammensetzungen für Tinten sind vorgeschlagen worden. Typische Tinten enthalten einen oder mehrere Farbstoffe, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit hervorragender Abriebfestigkeit.
(5) Die Tinte verstopft die Tintenstrahldruckerdüsen nicht, auch wenn diese längere Zeit während Druckpausen nicht abgedeckt sind.
(6) Die Tinte kann lange Zeit gelagert werden, ohne dass ihre Qualität abnimmt.
(7) Die physikalischen Eigenschaften der Tinte, wie Viskosität, Leitfähigkeit und Oberflächenspannung liegen alle innerhalb vorgegebener, für die Anwendung geeigneter Grenzen.
(8) Die Tinte muss ungiftig, unbrennbar und unschädlich sein.

### Beschreibung der Erfindung

Ziel der Erfindung ist die Bereitstellung neuer Monoazofarbstoffe mit rotem Farbton, die gleichzeitig lichtecht und gut löslich sind. Sie ergeben Bilder oder Färbungen mit allgemein guten Eigenschaften, insbesondere im Tintenstrahldruck, wo sie Bilder mit maximaler Farbwiedergabe insbesondere im Sechsfarbendruck ergeben.

Ein weiteres Ziel der Erfindung ist die Bereitstellung von flüssigen Farbstoffpräparationen, insbesondere von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger eine spektral unveränderte Farbe ergeben.
Ein weiteres Ziel der Erfindung ist die Bereitstellung von Tinten, die alle vorhin erwähnten Anforderungen erfüllen.

Die vorliegende Erfindung bezieht sich auf neue Monoazofarbstoffe der allgemeinen Formeln (III) 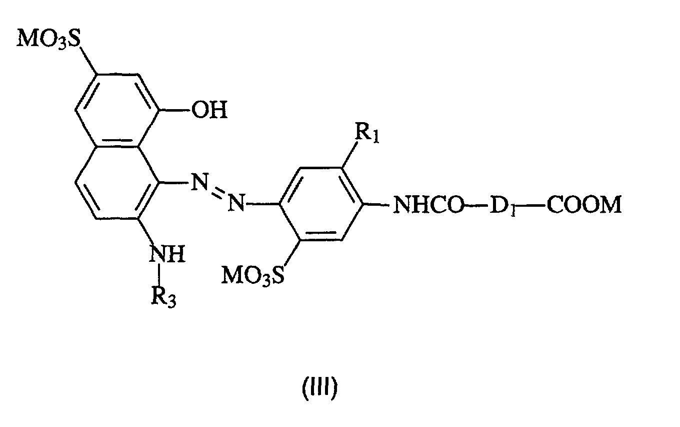 und (IV) 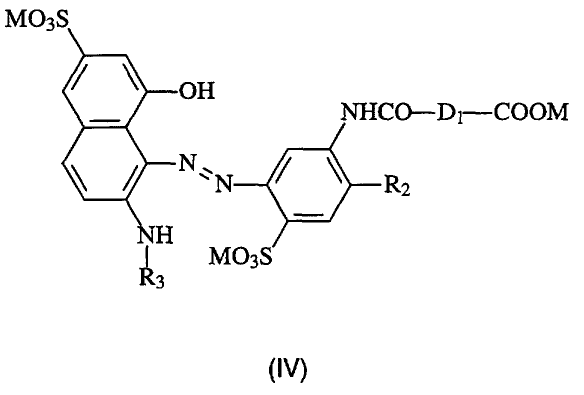 worin
- R₁, R₂: unabhängig voneinander für Wasserstoff, Alkyl oder Alkoxy mit je 1 bis 4 C-Atomen, Fluor, Chlor oder Brom stehen;
- R₃: für Wasserstoff, Alkyl mit 1 bis 6 C-Atomen, für substituiertes Alkyl mit 2 bis 6 C-Atomen, wobei die Substituenten aus der Gruppe bestehend aus Cyan, Carboxy, Hydroxy, Carboxymethyl und Carboxyethyl ausgewählt werden, oder Phenyl oder mit Methyl, Chlor, Brom, Carboxy oder einer Sulfogruppe substituiertes Phenyl steht;
- D₁: für einen unsubstituierten oder substituierten Alkylenrest mit 2 oder 3 C-Atomen, wobei die Substituenten aus der Gruppe bestehend aus Alkyl oder Alkenyl mit 1 bis 6 C-Atomen oder Fluor, Chlor und Brom ausgewählt werden, CH₂OCH₂ oder CH=CH steht oder D₁ Teil eines aliphatischen Ringes bestehend aus 5 oder 6 C-Atomen ist;
und
- M: für Wasserstoff, ein Metallkation oder ein Ammoniumkation, das gegebenenfalls einen oder mehrere Alkylreste oder substituierte Alkylreste mit jeweils 1 bis 18 C-Atomen aufweist, steht.

Bevorzugt sind Monoazofarbstoffe der Formeln (III) und (IV), bei denen M die vorhin angegebene Bedeutung hat und
- R₁, R₂: unabhängig voneinander für Wasserstoff, Methyl, Methoxy oder Chlor stehen;
- R₃: für Wasserstoff, Alkyl mit 1 bis 6 C-Atomen, für substituiertes Alkyl mit 2 oder 3 C-Atomen wobei die Substituenten aus der Gruppe bestehend aus Cyan, Carboxy und Hydroxy ausgewählt werden, steht;
und
- D₁: für n-Alkylen mit 2 oder 3 C-Atomen, CH₂OCH₂ oder CH=CH steht.

Weiter bevorzugt sind Monoazofarbstoffe der Formeln (III) und (IV), bei denen M, R₁, R₂ und D₁ die vorhin angegebene Bedeutung haben
und
- R₃: für Wasserstoff, Methyl, CH₂CH₂COOH oder CH₂CH₂OH steht.

Besonders bevorzugt sind Monoazofarbstoffe der Formeln (III) und (IV), bei denen M, R₁, R₂ und D₁ die vorhin angegebene Bedeutung haben
und
- R₃: für Wasserstoff steht.

Ebenfalls bevorzugt sind Monoazofarbstoffe der allgemeinen Formel (IV), bei denen M die vorhin angegebene Bedeutung hat,
- R₂: für Wasserstoff, Methyl, Methoxy oder Chlor steht;
- R₃: für Wasserstoff, Alkyl mit 1 bis 6 C-Atomen, für substituiertes Alkyl mit 2 bis 6 C-Atomen, wobei die Substituenten aus der Gruppe bestehend aus Cyan, Carboxy, Hydroxy, Carboxymethyl und Carboxyethyl ausgewählt werden, oder Phenyl oder mit Methyl, Chlor, Brom, Carboxy oder einer Sulfogruppe substituiertes Phenyl steht;
und
- D₁: für unsubstituiertes oder substituiertes Alkylen mit 2 oder 3 C-Atomen, wobei die Substituenten aus der Gruppe bestehend aus Alkyl oder Alkenyl mit 1 bis 6 C-Atomen oder Fluor, Chlor und Brom ausgewählt werden, oder für CH₂OCH₂ steht oder D₁ Teil eines aliphatischen Ringes bestehend aus 5 oder 6 C- Atomen ist.

Die hergestellten Farbstoffe der allgemeinen Formel (III) sind zusammen mit ihrem Absorptionsmaximum in wässriger Lösung in Tabelle 1 zusammengestellt:

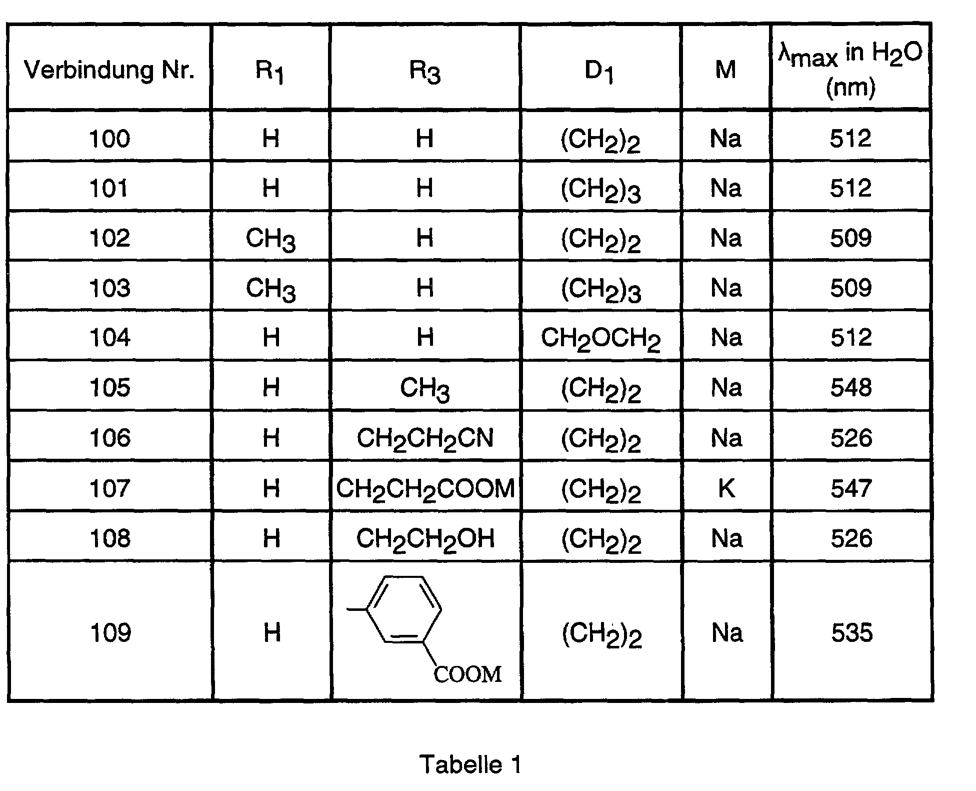

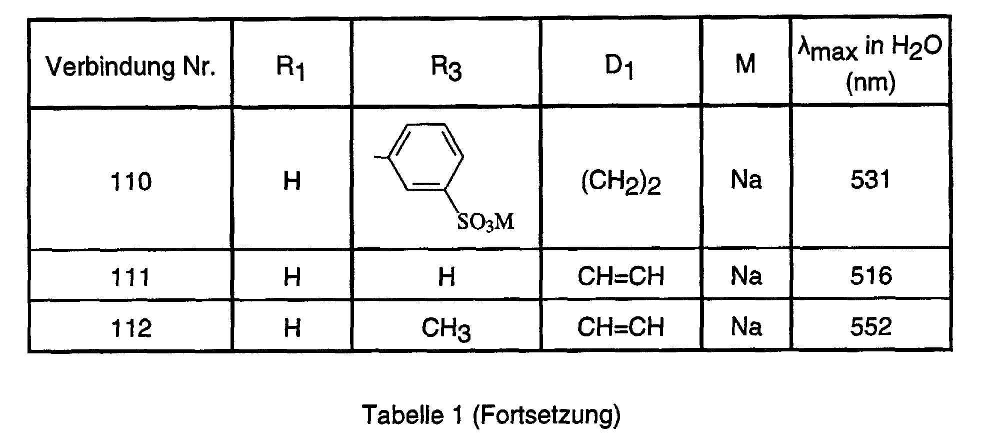

Die hergestellten Farbstoffe der allgemeinen Formel (IV) sind zusammen mit ihrem Absorptionsmaximum in wässriger Lösung in Tabelle 2 zusammengestellt:

**Tabelle 2**

| Verbindung Nr. | R₂ | R₃ | D₁ | M | λₘₐₓ in H₂O (nm) |
|---|---|---|---|---|---|
| 120 | H | H | (CH₂)₂ | Na | 506 |
| 121 | H | H | (CH₂)₃ | Na | 506 |
| 122 | OCH₃ | H | (CH₂)₂ | Na | 508 |
| 123 | OCH₃ | H | (CH₂)₃ | Na | 508 |
| 124 | OCH₃ | CH₃ | (CH₂)₂ | Na | 549 |
| 125 | OCH₃ | CH₂CH₂CN | (CH₂)₂ | Na | 543 |
| 126 | OCH₃ | CH₂CH₂COOM | (CH₂)₂ | K | 547 |
| 127 | H | CH₃ | CH=CH | Na | 539 |
| 128 | H | CH₂CH₂OH | (CH₂)₂ | Na | 521 |

Die Verbindungen der allgemeinen Formeln (III) und (IV) können als freie Säuren oder als anorganische oder organische Salze dieser Säuren vorliegen. Vorzugsweise liegen sie in Form ihrer Alkali- oder Ammoniumsalze vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methylammonium, Tris-[2-(2-methoxyethoxy)-ethyl]-ammonium, 8-Hydroxy-3,6-dioxaoctylammonium und Tetraalkylammonium wie z. B. Tetramethylammonium oder Tetrabutylammonium.

Weiter betrifft die Erfindung nicht nur reine Farbstoffe der allgemeinen Formeln (III) und (IV), sondern auch Gemische dieser Verbindungen oder Gemische mit anderen Farbstoffen.

Die Erfindung betrifft weiterhin zwei Verfahren (A) und (B) zur Herstellung der erfindungsgemässen Monoazofarbstoffe der Formeln (III) und (IV), das dadurch gekennzeichnet ist, dass
im Verfahren (A)
   eine Verbindung der allgemeinen Formel (V) 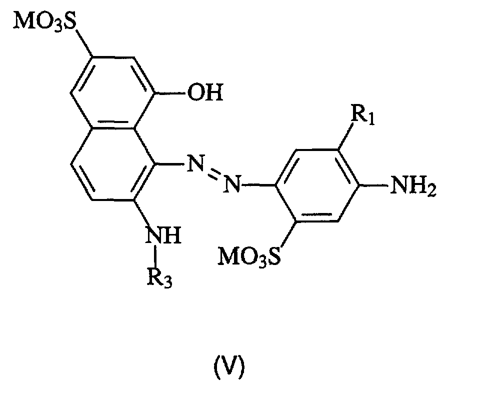 oder (VI) 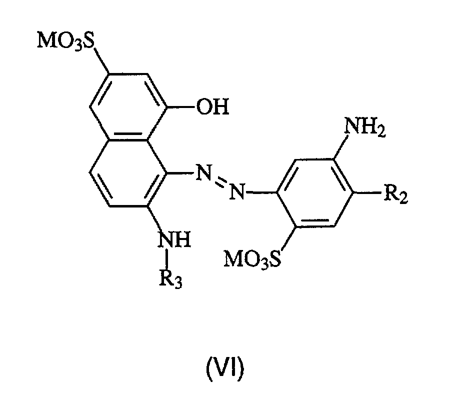 worin R₁, R₂, R₃ und M die gleiche Bedeutung wie vorher angegeben haben, mit einer Verbindung der Formel (VII), 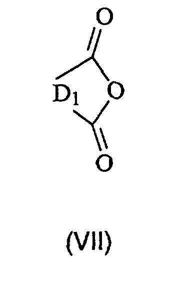 worin D₁ die gleiche Bedeutung wie vorher angegeben hat, unter Bedingungen umgesetzt wird, dass das cyclische Anhydrid der Formel (VII) mit den Farbaminen der Formeln (V) oder (VI) unter Bildung des Amids zu den erfindungsgemässen Farbstoffen der allgemeinen Formeln (III) oder (IV) reagiert;
   oder
im Verfahren (B)
   (i) eine Verbindung der allgemeinen Formel (VIII) 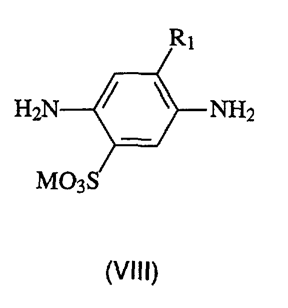 oder (IX), 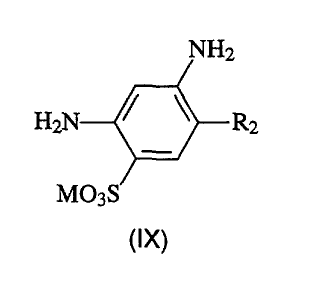 worin R₁, R₂ und M die gleiche Bedeutung wie vorher angegeben haben, mit einer Verbindung der Formel (VII), worin D₁ die gleiche Bedeutung wie vorher angegeben hat, unter Bedingungen umgesetzt wird, dass selektiv das Amin in para- oder meta-Stellung zur Sulfogruppe mit dem cyclischen Anhydrid der Formel (VII) unter Bildung der Amide der Formeln (X) oder (XI) reagiert 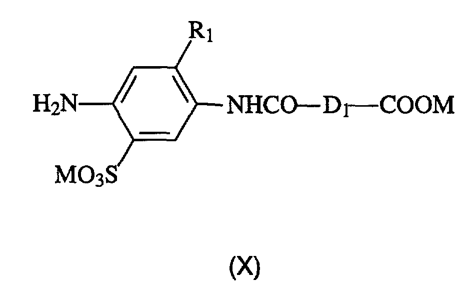 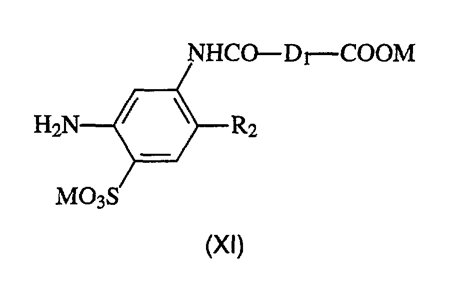 und
   (ii)durch Diazotierung und Kupplung der Aniline der Formeln (X) und (XI) mit der Verbindung der allgemeinen Formel (XII) 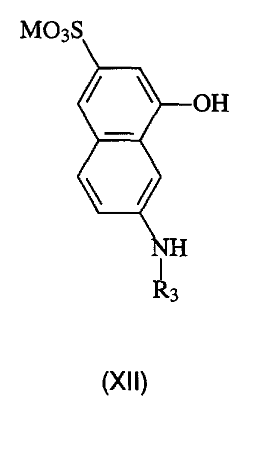 worin R₃ die gleiche Bedeutung wie vorher angegeben hat, die erfindungsgemässen Farbstoffe der allgemeinen Formeln (III) und (IV) gebildet werden.

Die erfindungsgemässen Farbstoffe der allgemeinen Formeln (III) und (IV) färben cellulosehaltige Materialien, Papier, Baumwolle und Viskose sowie Leder und Wolle mit guten Nass- und Lichtechtheiten.
Die Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Gam- und Stückfärberei von Baumwolle, Viskose und Leinen nach dem Ausziehverfahren oder im kontinuierlichen Verfahren angewandt werden.

Die Erfindung betrifft weiter flüssige Farbstoffpräparationen enthaltend mindestens einen Farbstoff der allgemeinen Formel (III) oder (IV). Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs.

Farbstoffe oder Mischungen von Farbstoffen der allgemeinen Formeln (III) und (IV) sind ausgezeichnete Farbstoffe zur Herstellung von Tinten für den Tintenstrahldruck, insbesondere von roten Tinten für den Sechsfarbendruck. Die Farbstoffe zeigen aber auch gute Eigenschaften als Purpurfarbstoffe im Vierfarbendruck.
Eine solche Tinte enthält eine oder mehrere der erfindungsgemässen Verbindungen in einem flüssigen wässrigen Lösungsmittel. Die Tinte enthält 0.5 bis 20 Gewichtsprozent, vorzugsweise 0.5 bis 8 Gewichtsprozent dieser Verbindungen, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind z. B. in den Patenten US 4'626'284, US 4'703'113 und US 4'963'189 und den Patentanmeldungen GB 2'289'473 und EP 0'425'15 und EP 0'597'672 beschrieben.

Farbtintenstrahldrucker verwenden normalerweise drei Tinten mit den verschiedenen Farben Gelb, Purpur und Blaugrün und in vielen Fällen noch eine schwarze Tinte, einen sogenannten "Tintensatz". Der Wunsch zur Verbesserung der Farbwiedergabe, insbesondere von Hauttönen, führt zur Verwendung zusätzlicher Tinten mit den Farben Rot und Orange. Die speziellen Farbstoffe, die zur Herstellung dieser Tinten verwendet werden, werden in ihrer Gesamtheit als "Farbstoffsatz" bezeichnet. Ein solcher Farbstoffsatz erlaubt die Herstellung von qualitativ hochstehenden Bildern im Tintenstrahldruck, in denen die Farbwiedergabe die gewerblichen Anforderungen erfüllt, insbesondere eine hervorragende Wiedergabe von Hauttönen. Die Gelbtinte, die Purpurtinte, die Blaugrüntinte, die Rottinte, die Orangetinte und die Schwarztinte enthalten 0.5 bis 20 Gewichtsprozent, vorzugsweise 0.5 bis 8 Gewichtsprozent Farbstoffe, bezogen auf das Gesamtgewicht der jeweiligen Tinte.

Geeignete Purpurtinten für einen solchen Tintensatz enthalten einen erfindungsgemässen Monoazofarbstoff oder ein Gemisch von erfindungsgemässen Monoazofarbstoffen der allgemeinen Formeln (III) und (IV). Die Purpurtinte kann noch andere Purpurfarbstoffe enthalten wie beispielsweise Säurerot 52, Säurerot 82, Säurerot 180, Säurerot 249, Säurerot 254, Säurerot 289, Säurerot 357, Reaktivrot 23, Reaktivrot 24, Reaktivrot 45, Reaktivrot 81, Reaktivrot 120, Reaktivrot 159, Reaktivrot 180, Basischviolett 10, Direktrot 75, Cibacronrot P-6B und Lanasolrot 2R oder Purpurfarbstoffe, wie sie in den Patentanmeldungen WO 96-24'636 und EP 0'755'984 offenbart wurden.
Bevorzugte Purpurfarbstoffe für die Purpurtinte eines solchen Tintensatzes sind die erfindungsgemässen Monoazofarbstoffe oder ein Gemisch von erfindungsgemässen Monoazofarbstoffen der allgemeinen Formeln (III) und (IV), oder ein Gemisch der erfindungsgemässen Monoazofarbstoffe der allgemeinen Formeln (III) und (IV) mit dem Farbstoff Nr. 102 der Patentanmeldung WO 96-24'636, mit Reaktivrot 23 oder Säurerot 52.

Geeignete Gelbtinten für einen solchen Tintensatz enthalten einen oder mehrere Gelbfarbstoffe wie Säuregelb 17, Säuregelb 23, Säuregelb 250, Reaktivgelb 39, Lösungsmittelgrün 7, Direktgelb 5, Direktgelb 86, Direktgelb 132 und Direktgelb 173 oder Gelbfarbstoffe, wie sie in den Patentanmeldungen WO 96-24'635, EP 0'755'984, EP 0'918'074 und EP 1'031'614 offenbart wurden.

Bevorzugte Gelbfarbstoffe für die Gelbtinte eines solchen Tintensatzes sind der Farbstoff Nr. 100 der Patentanmeldung EP 0'755'984 oder der Farbstoff Nr. 100 der Europäischen Patentanmeldung 1'031'614.

Geeignete Blaugrüntinten für einen solchen Tintensatz enthalten einen oder mehrere Blaugrünfarbstoffe wie Säureblau 9, Direktblau 199, Reaktivblau 2, Drimarenbrilliantgrün K4G oder Basacidblau 762.
Bevorzugte Blaugrünfarbstoffe für die Blaugrüntinte eines solchen Tintensatzes sind Direktblau 199 und Säureblau 9.

Geeignete Schwarztinten für einen solchen Tintensatz enthalten einen oder mehrere Schwarzfarbstoffe wie Lebensmittelschwarz 2, Direktschwarz 17, Direktschwarz 19, Direktschwarz 31, Direktschwarz 168 und Säureschwarz 194 oder Schwarzfarbstoffe, wie sie in den Patentanmeldungen EP 0'859'033, EP 0'924'274 und EP 0'982'371 offenbart wurden.
Bevorzugte Schwarzfarbstoffe für die Schwarztinte eines solchen Tintensatzes sind der Farbstoff Nr. 19 der Patentanmeldung EP 0'982'371, Direktschwarz 31 oder Säureschwarz 194.

Geeignete Rottinten für einen solchen Tintensatz enthalten einen erfindungsgemässen Monoazofarbstoff oder ein Gemisch von erfindungsgemässen Monoazofarbstoffen der allgemeinen Formeln (III) und (IV). Die Rottinte kann noch andere Rotfarbstoffe enthalten wie Basantolrot 311, Cibacronorange MI-2R oder rote Farbstoffe, wie sie in der Patentanmeldung WO 96-24'636 offenbart wurden.
Bevorzugte Rotfarbstoffe für die Rottinte eines solchen Tintensatzes sind erfindungsgemässe Monoazofarbstoffe oder ein Gemisch von erfindungsgemässen Monoazofarbstoffen der allgemeinen Formeln (III) und (IV).

Geeignete Orangetinten für einen solchen Tintensatz enthalten einen Farbstoff oder ein Gemisch von Farbstoffen wie Cibacronorange 2R, Säurerot 496, Säureorange 7, Säureorange 74, Solophenylorange TGL, Bayscriptorange ZAW, Drimarenbrilliantorange K-3R, Anthosinorange 35 oder orange Farbstoffe, wie sie in der Patentanmeldung WO 96-24'635 offenbart wurden.
Bevorzugte Orangefarbstoffe für die Orangetinte eines solchen Tintensatzes sind der Azofarbstoff der Formel (8) der Patentanmeldung WO 96-24'635 mit den Substituenten OCH₃ für R₃ und R₄, H für R₅ und CH₂CH₂SO₃M für R6 oder ein Gemisch dieses Farbstoffs mit einem erfindungsgemässen Monoazofarbstoff der allgemeinen Formeln (III) und (IV).

Die vorliegende Erfindung wird durch die folgenden Beispiele näher beschrieben, ohne dass dadurch die beanspruchten Verbindungen in irgendeiner Weise eingeschränkt werden.

### Beispiele

### Beispiel 1

Die Verbindung Nr. 100 aus Tabelle 1 wurde nach dem Herstellungsverfahren (A) folgendermassen hergestellt:

### Lösung A:

10,6 g (20 mMol) Säurerot 34 der Formel (XIII) (Gehalt: 91 %) 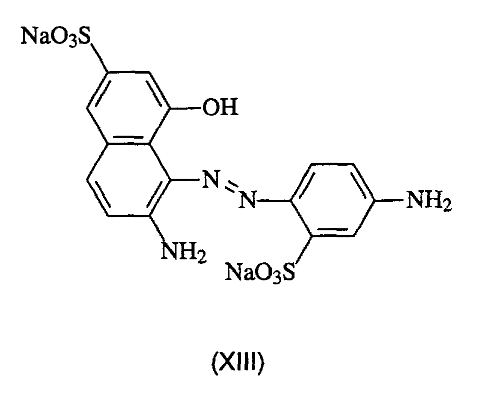 und 60 ml Wasser wurden 1 Stunde bei Raumtemperatur gerührt.

### Herstellung des Farbstoffs Nr. 100:

Zur Lösung A wurde unter Rühren bei einer Temperatur von 20° C portionenweise 5 g (50 mMol) festes Bernsteinsäureanhydrid innert 30 Minuten zudosiert und der pH-Wert durch gleichzeitiges Zudosieren von Natronlauge (15 %) zwischen 5 und 6 gehalten. Nach beendeter Zugabe wurde 2 Stunden bei Raumtemperatur weitergerührt. Der Farbstoff wurde durch Zugabe von Natriumchlorid ausgesalzen, abfiltriert, durch Waschen mit Wasser / Ethanol gereinigt und getrocknet. Man erhielt so 9,4 g des Farbstoffs Nr. 100.

### Beispiel 2

Die Verbindung Nr. 101 aus Tabelle 1 wurde nach dem Herstellungsverfahren (A) folgendermassen hergestellt:
Zur Lösung A aus Beispiel 1 wurde unter Rühren bei einer Temperatur von 40° C portionenweise 5,7 g (50 mMol) festes Glutarsäureanhydrid innert 30 Minuten zugegeben und der pH-Wert durch gleichzeitiges Zudosieren von Natronlauge (15 %) zwischen 4 und 5 gehalten. Nach beendeter Zugabe wurde 2 Stunden bei Raumtemperatur weitergerührt. Der Farbstoff wurde durch Zugabe von Natriumchlorid ausgesalzen, abfiltriert, durch Waschen mit Wasser / Ethanol gereinigt und getrocknet. Man erhielt so 10,8 g des Farbstoffs Nr. 101.

Auf ähnliche Art und Weise können durch die Wahl geeigneter Ausgangsmaterialien die Farbstoffe Nr. 102 bis 112 und 122 bis 128 hergestellt werden.

### Beispiel 3

Die Verbindung Nr. 120 aus Tabelle 2 wurde nach dem Herstellungsverfahren (B) folgendermassen hergestellt:

### Herstellung des Amids der Formel (XIV):

Zu einer Lösung von 21 g (100 mMol) des Natriumsalzes der 1,3-Phenylendiamin-4-sulfosäure in 50 ml Wasser wurde unter Rühren bei einer Temperatur von 20° C portionenweise 13 g (130 mMol) festes Bernsteinsäureanhydrid innert 30 Minuten zugegeben und der pH-Wert durch gleichzeitiges Zudosieren von Natronlauge (15 %) zwischen 6 und 7 gehalten. Nach beendeter Zugabe wurde 2 Stunden bei Raumtemperatur weitergerührt. Die Lösung wurde nach Zugabe von Celit klarfiltriert. Das Produkt wurde im Filtrat durch Absenken des pH-Wertes auf 3,0 ausgefällt, der Niederschlag abfiltriert und getrocknet. Man erhielt so 25,6 g des Amids der Formel (XIV).

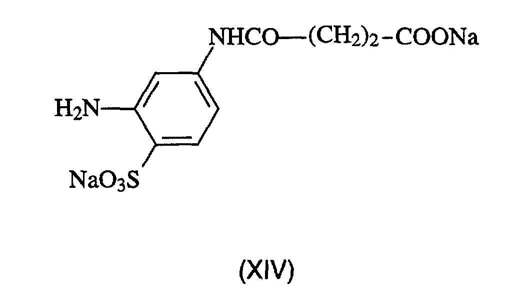

### Lösung A:

6,4 g (20 mMol) des Amids der Formel (XIV) wurden in 60 ml Wasser suspendiert und unter Rühren wurden 5 ml wässrige Salzsäurelösung (37 %) zugegeben. Das Gemisch wurde auf eine Temperatur zwischen 0° C und 5° C abgekühlt. Bei einer Innentemperatur von 0° C bis 5° C wurden unter Rühren innert 20 Minuten 5 ml einer wässrigen Natriumnitritlösung (4N) zugetropft. Anschliessend wurde 1 Stunde bei dieser Temperatur weitergerührt. Die im Überschuss vorhandene salpetrige Säure wurde anschliessend durch Reaktion mit Sulfaminsäure entfernt.

### Herstellung des Farbstoffs Nr. 120:

Bei einer Innentemperatur von 5° C bis 10° C wurde unter Rühren innert 60 Minuten die kalte Lösung A zu einer Lösung von 5,7 g (20 mMol) des Natriumsalzes der 2-Amino-8-naphthol-6-sulfonsäure (91,3 %) in 50 ml Wasser zugegeben und der pH-Wert durch gleichzeitiges Zudosieren von Natronlauge (20 %) zwischen 2 und 4 gehalten. Nach beendeter Zugabe wurde 2 Stunden bei einer Temperatur zwischen 5° C und 20° C und anschliessend 16 Stunden bei Raumtemperatur weitergerührt. Der Farbstoff wurde durch Zugabe von Natriumchlorid ausgesalzen, der Niederschlag abfiltriert, durch Waschen mit Wasser / Ethanol gereinigt und getrocknet. Man erhielt so 8,2 g des Farbstoffs Nr. 120.

### Beispiel 4

Die Verbindung Nr. 121 aus Tabelle 2 wurde nach dem Herstellungsverfahren (B) folgendermassen hergestellt:

### Herstellung des Amids der Formel (XV):

Zu einer Lösung von 21 g (100 mMol) des Natriumsalzes der 1,3-Phenylendiamin-4-sulfosäure in 60 ml Wasser wurden unter Rühren bei einer Temperatur von 20° C portionenweise 14,8 g (13 mMol) festes Glutarsäureanhydrid innert 30 Minuten zugegeben und der pH-Wert durch gleichzeitiges Zudosieren von Natronlauge (15 %) zwischen 4 und 5 gehalten. Nach beendeter Zugabe wurde 2 Stunden bei Raumtemperatur weitergerührt. Der Niederschlag wurde abfiltriert und getrocknet. Man erhielt so 13,2 g des Amids der Formel (XV).

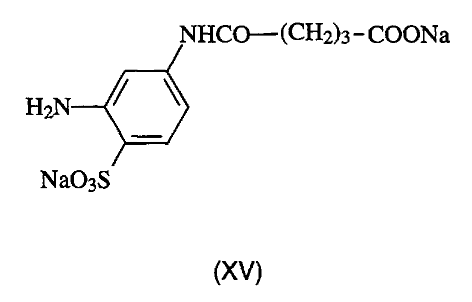

### Lösung A:

6,6 g (20 mMol) des Amids der Formel (XV) wurden in 60 ml Wasser suspendiert. Unter Rühren wurden 5 ml einer wässrigen Salzsäurelösung (37 %) zugegeben und das Gemisch auf eine Temperatur zwischen 0° C und 5° C abgekühlt. Bei einer Innentemperatur zwischen 0° C bis 5° C wurden unter Rühren innert 20 Minuten 5 ml einer wässrigen Natriumnitritlösung (4N) zugetropft. Anschliessend wurde 1 Stunde bei dieser Temperatur weitergerührt. Die im Überschuss vorhandene salpetrige Säure wurde anschliessend durch Reaktion mit Sulfaminsäure entfernt.

### Herstellung des Farbstoffs Nr. 121:

Bei einer Innentemperatur zwischen 5° C und 10° C wurde unter Rühren innert 60 Minuten die kalte Lösung A zu einer Lösung von 5,7 g (20 mMol) des Natriumsalzes der 2-Amino-8-naphthol-6-sulfonsäure (91,3 %) in 50 ml Wasser zugegeben und der pH-Wert durch gleichzeitiges Zudosieren von Natronlauge (20 %) zwischen 2 und 4 gehalten. Nach beendeter Zugabe wurde 2 Stunden bei einer Temperatur zwischen 5° C und 20° C und anschliessend 16 Stunden bei Raumtemperatur weitergerührt. Der Farbstoff wurde durch Zugabe von Natriumchlorid ausgesalzen, der Niederschlag abfiltriert, durch Waschen mit Wasser / Ethanol gereinigt und getrocknet. Man erhielt so 8,6 g des Farbstoffs Nr. 121.

### Herstellungsbeispiel für Tinten

Die vorliegende Erfindung wird, soweit sie sich auf Tinten bezieht, durch die folgenden Beispiele beschrieben, in denen erfindungsgemässe Farbstoffe aus den Tabellen 1 und 2 und Farbstoffe des bisherigen Standes der Technik verusendet werden.100 g jeder Tinte wurden hergestellt, indem die benötigte Menge Farbstoff (2 - 7 g), Glycerin (5 g), Ethylenglykol (5 g) und eine Biocid-Lösung (Promexal X50, erhältlich bei Zeneca, Manchester, England) (1,2 g) zusammen mit Wasser etwa 1 Stunde unter Rühren auf eine Temperatur von 50° C erwärmt wurden. Die erhaltene Lösung wurde auf eine Temperatur von 20° C abgekühlt und ihr pH-Wert auf 7,5 eingestellt. Anschliessend wurde die Lösung durch ein Millipore® -Filter mit 0,5 µm Porendurchmesser abfiltriert. Die Farbstoffmenge wurde so gewählt, dass die optische Dichte des bedruckten Bildes für alle Farbstoffe möglichst gleich war.

### Anwendungsbeispiele von Tinten

Die Tinten wurden anschliessend mit Hilfe eines Tintenstrahldruckers des Typs HP560 von Hewlett-Packard auf die Aufzeichnungsmaterialien Ilfojet Photo Grade Glossy RC Paper UM2GP6 (Material 1) und Ilfojet Photo Grade Clear Film UMCF4 (Material 2) (erhältlich bei ILFORD Imaging Switzerland GmbH, Freiburg, Schweiz) aufgebracht. Anschliessend wurden die Prüfungen an den bedruckten Muster durchgeführt.

### Prüfungen

Die Prüfverfahren für die Farbstofflöslichkeit und die Farbkoordinaten der Farbstoffe der Erfindung und des Standes der Technik sind die folgenden:

### (A) Farbstofflöslichkeit

Ein Überschuss an Farbstoff wird in Wasser bei einer Temperatur von 50° C 1 Stunde gut gerührt. Dann wird das Gemisch auf eine Temperatur von 20° C abgekühlt und filtriert. Der Farbstoffgehalt der klaren Filtratlösung wird dann spektroskopisch bestimmt.

### (B) Farbkoordinaten

L*a*b*-Werte wurden auf bedruckten Mustern mit Hilfe eines Spektrometers Gretag SPM 100, erhältlich bei Gretag AG, Regensdorf, Schweiz, gemessen.

### Ergebnisse

Die nach dem vorhin beschriebenen Verfahren bestimmten Farbstofflöslichkeiten sind in Tabelle 5 aufgeführt.

**Tabelle 5**

| Farbstoff Nr. | Löslichkeit (in g pro 100 ml Wasser) |
|---|---|
| Säurerot 37 | 5 |
| 100 | 24 |
| 101 | 30 |
| 120 | 16 |

Die Ergebnisse in Tabelle 5 zeigen die signifikant höhere Löslichkeit der erfindungsgemässen roten Farbstoffe Nr. 100, 101 und 120 verglichen mit dem bekannten Farbstoff Säurerot 37.

Die L*a*b*-Werte (Lichtart D65) für die erfindungsgemässen Farbstoffe und die Farbstoffe des Standes der Technik sind in Tabelle 6 zusammengestellt.

**Tabelle 6**

| Verbindung Nr. | L∗a∗b∗-Werte (Material 1) | L∗a∗b∗-Werte (Material 2) |
|---|---|---|
| 100 | 45,4 / 75,2 / 12,7 | 49,6 / 81,8 / 1,2 |
| 101 | 45,7 / 75,8 / 12,0 | 49,5 / 83,0 / -0,5 |
| 102 | 44,9 / 73,3 / 17,9 | 49,1 / 80,7 / 10,2 |
| 103 | 46,5 / 72,4 / 15,9 | 50,1 / 80,2 / 6,9 |
| 104 | 46,6 / 74,0 / 9,6 | 48,4 / 83,2 / 2,1 |
| 112 | 48,6 / 74,7 / 24,3 | 53,3 / 79,9 / 12,7 |
| 113 | 50,0 / 72,8 / 19,5 | 53,2 / 79,6 / 16,7 |
| 120 | 46,5 / 69,5 / 31,2 | 51,7 / 75,3 / 26,8 |
| 121 | 47,3 / 71,0 / 31,6 | 52,9 / 76,5 / 24,5 |
| I (Säurerot 37) | 44,7 / 74,5 / 16,5 | 48,4 / 81,4 / 6,4 |
| II | 42,0 / 75,6 / -1,2 | 44,5 / 84,7 / -13,0 |

Ein Vergleich der gemessenen L*a*b*-Werte von bedruckten Mustem, in denen in den Tinten die erfindungsgemässen Farbstoffe enthalten sind, zeigt klar, dass die Tinten mit den beanspruchten Farbstoffen (insbesondere mit den Farbstoffen 120 und 121) höhere b*-Werte aufweisen als Tinten, die die bekannten Monoazofarbstoffe (I) und (II) enthalten, d. h. sie zeigen einen wesentlich röteren Farbton. Leuchtend rote Farben, wie beispielsweise das Rot von Coca Cola® (L*a*b*-Wert 44,5 / 72,7 / 41,4), erfordern rote, brillante Farbstoffe mit hohem b*-Wert. Die erfindungsgemässen Farbstoffe eignen sich deshalb ausgezeichnet als Rotfarbstoffe im Sechsfarbentintenstrahldruck, wo sie als Spotfarben eingesetzt werden können.

## Patentansprüche

1. Monoazofarbstoffe der allgemeinen Formeln (III) 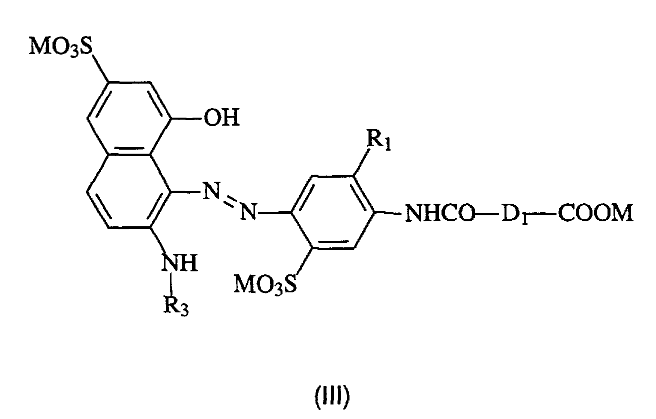 und (IV) 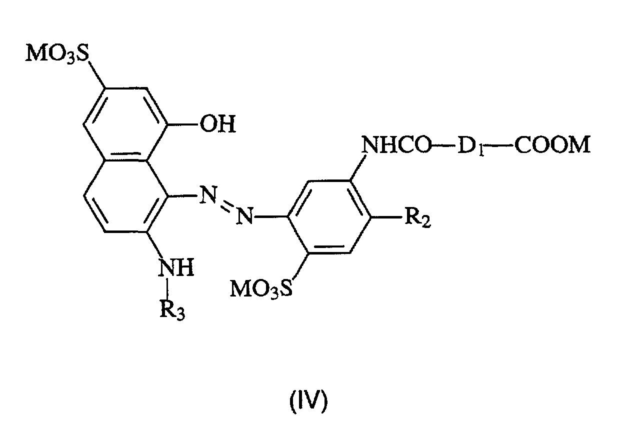 worin
R₁, R₂ unabhängig voneinander für Wasserstoff, Alkyl oder Alkoxy mit je 1 bis 4 C-Atomen, Fluor, Chlor oder Brom stehen;
R₃ für Wasserstoff, Alkyl mit 1 bis 6 C-Atomen, für substituiertes Alkyl mit 2 bis 6 C-Atomen, wobei die Substituenten aus der Gruppe bestehend aus Cyan, Carboxy, Hydroxy, Carboxymethyl und Carboxyethyl ausgewählt werden, oder Phenyl oder mit Methyl, Chlor, Brom, Carboxy oder einer Sulfogruppe substituiertes Phenyl steht;
D₁ für unsubstituiertes oder substituiertes Alkylen mit 2 oder 3 C-Atomen, wobei die Substituenten aus der Gruppe bestehend aus Alkyl oder Alkenyl mit 1 bis 6 C-Atomen oder Fluor, Chlor und Brom ausgewählt werden, oder für CH₂OCH₂ oder CH=CH steht, oder D₁ Teil eines aliphatischen Ringes bestehend aus 5 oder 6 C- Atomen ist;
und
M für Wasserstoff, ein Metallkation oder ein Ammoniumkation steht, das gegebenenfalls einen oder mehrere Alkylreste oder substituierte Alkylreste mit jeweils 1 bis 18 C-Atomen aufweist, steht.

2. Monoazofarbstoffe nach Anspruch 1, **dadurch gekennzeichnet, dass**
M die gleiche Bedeutung wie in Anspruch 1 hat;
R₁, R₂ unabhängig voneinander für Wasserstoff, Methyl, Methoxy oder Chlor stehen;
R₃ für Wasserstoff, Alkyl mit 1 bis 6 C-Atomen, für substituiertes Alkyl mit 2 oder 3 C-Atomen wobei die Substituenten aus der Gruppe bestehend aus Cyan, Carboxy und Hydroxy ausgewählt werden, steht;
und
D₁ für n-Alkylen mit 2 oder 3 C-Atomen, CH₂OCH₂ oder CH=CH steht.

3. Monoazofarbstoffe nach Anspruch 2, **dadurch gekennzeichnet, dass**
M die gleiche Bedeutung wie in Anspruch 1 hat;
R₁, R₂, D₁ die gleiche Bedeutung wie in Anspruch 2 haben;
und
R₃ für Wasserstoff, Methyl, CH₂CH₂COOH oder CH₂CH₂OH steht.

4. Monoazofarbstoffe nach Anspruch 3, **dadurch gekennzeichnet, dass**
M die gleiche Bedeutung wie in Anspruch 1 hat;
R₁, R₂, D₁ die gleiche Bedeutung wie in Anspruch 2 haben;
und
R₃ für Wasserstoff steht.

5. Monoazofarbstoffe der allgemeinen Formel (IV),
worin
R₂ für Wasserstoff, Methyl, Methoxy oder Chlor steht;
R₃ für Wasserstoff, Alkyl mit 1 bis 6 C-Atomen, für substituiertes Alkyl mit 2 bis 6 C-Atomen, wobei die Substituenten aus der Gruppe bestehend aus Cyan, Carboxy, Hydroxy, Carboxymethyl und Carboxyethyl ausgewählt werden, oder Phenyl oder mit Methyl, Chlor, Brom, Carboxy oder einer Sulfogruppe substituiertes Phenyl steht;
D₁ für unsubstituiertes oder substituiertes Alkylen mit 2 oder 3 C-Atomen, wobei die Substituenten aus der Gruppe bestehend aus Alkyl oder Alkenyl mit 1 bis 6 C-Atomen oder Fluor, Chlor und Brom ausgewählt werden, oder für CH₂OCH₂ steht oder D₁ Teil eines aliphatischen Ringes bestehend aus 5 oder 6 C- Atomen ist; und
M für Wasserstoff, ein Metallkation oder ein Ammoniumkation steht, das gegebenenfalls einen oder mehrere Alkylreste oder substituierte Alkylreste mit jeweils 1 bis 18 C-Atomen aufweist, steht.

6. Verfahren zur Herstellung der Monoazofarbstoffe nach Anspruch 1, **dadurch gekennzeichnet, dass**
im Verfahren (A)
eine Verbindung der allgemeinen Formel (V) 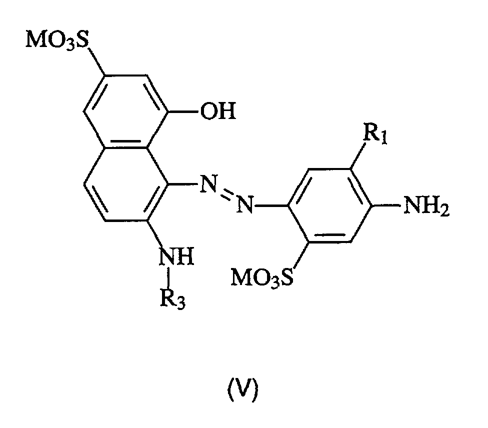 oder (VI) 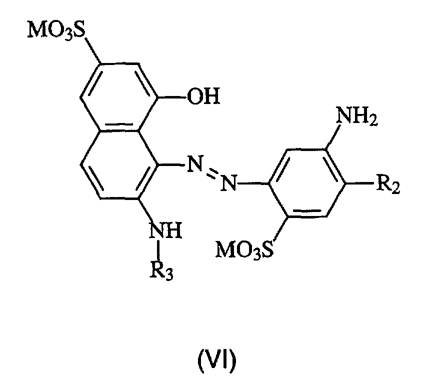 worin R₁, R₂, R₃ und M die gleiche Bedeutung wie in Anspruch 1 haben, mit einer Verbindung der Formel (VII), 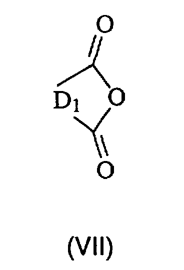 worin D₁ die gleiche Bedeutung wie in Anspruch 1 hat, unter Bedingungen umgesetzt wird, dass das cyclische Anhydrid der Formel (VII) mit den Farbaminen der Formeln (V) oder (VI) unter Bildung des Amids zu den erfindungsgemässen Farbstoffen der allgemeinen Formeln (III) oder (IV) reagiert;
oder
im Verfahren (B)
(i) eine Verbindung der allgemeinen Formel (VIII) 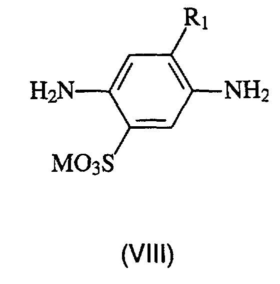 oder (IX), 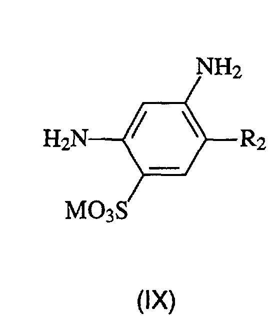 worin R₁, R₂ und M die gleiche Bedeutung wie in Anspruch 1 haben, mit einer Verbindung der Formel (VII), worin D₁ die gleiche Bedeutung wie in Anspruch 1 hat, unter Bedingungen umgesetzt wird, dass selektiv das Amin in para- oder meta-Stellung zur Sulfogruppe mit dem cyclischen Anhydrid der Formel (VII) unter Bildung der Amide der Formeln (X) oder (XI) reagiert 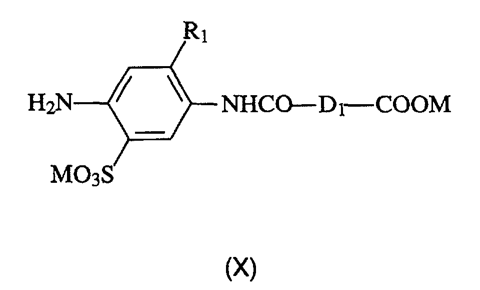 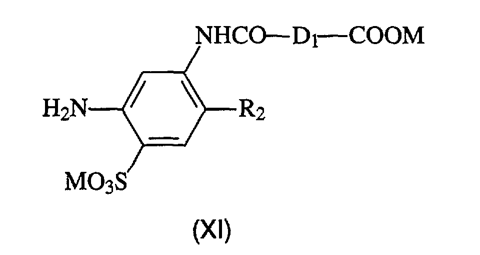 und
(ii) durch Diazotierung und Kupplung der Aniline der Formeln (X) und (XI) mit der Verbindung der allgemeinen Formel (XII) 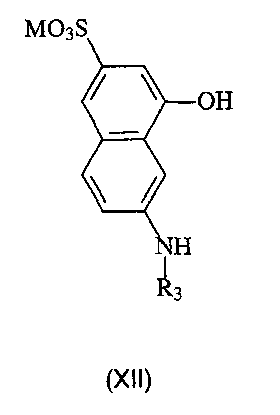
worin R₃ die gleiche Bedeutung wie in Anspruch 1 hat, die Farbstoffe der allgemeinen Formeln (III) und (IV) gebildet werden.

7. Verwendung der Monoazofarbstoffe nach einem oder mehreren der Ansprüche 1 bis 5 zum Färben von cellulosehaltigen Materialien, Papier, Baumwolle, Viskose, Leder und Wolle.

8. Flüssige Farbstoffpräparationen, die mindestens einen Farbstoff oder eine Mischung von Farbstoffen nach einem oder mehreren der Ansprüche 1 bis 5 enthalten.

9. Tinten für den Tintenstrahldruck, die mindestens einen Farbstoff oder eine Mischung von Farbstoffen nach einem oder mehreren der Ansprüche 1 bis 5 enthalten.

10. Tinten für den Tintenstrahldruck, die neben mindestens einem Farbstoff oder einer Mischung von Farbstoffen nach einem oder mehreren der Ansprüche 1 bis 5 einen oder mehrere weitere Farbstoffe enthalten.

## Claims

1. Monoazo dyes of general formulas (III) 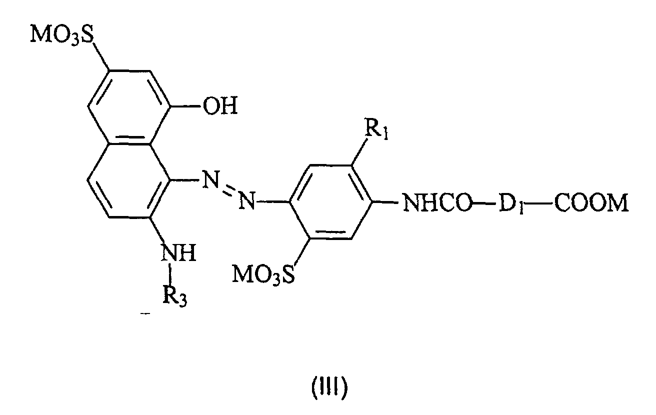 and (IV) 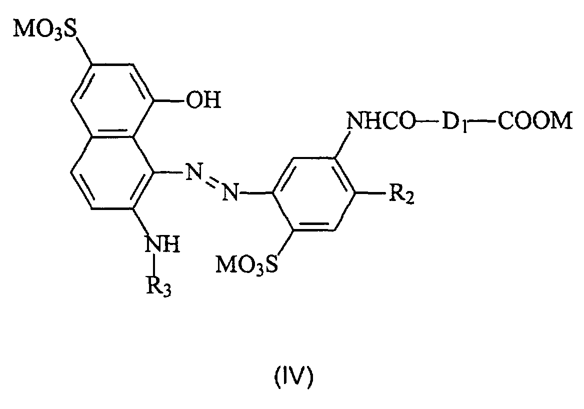 wherein
R₁, R₂ independently represent hydrogen, alkyl or alkoxy each having 1 to 4 C atoms, fluoro, chloro or bromo;
R₃ represents hydrogen, alkyl with 1 to 6 C atoms, substituted alkyl with 2 to 6 C atoms, wherein the substituents are selected from the group consisting of cyano, carboxy, hydroxy, carboxymethyl and carboxyethyl, or phenyl or phenyl substituted by methyl, chloro, bromo, carboxy or sulfo;
D₁ represents unsubstituted or substituted alkylene with 2 or 3 C atoms, wherein the substituents are selected from the group consisting of alkyl or alkenyl with 1 to 6 C atoms, fluoro, chloro and bromo, CH₂OCH₂ or CH=CH or where D₁ is part of an aliphatic ring consisting of 5 or 6 C atoms;
and
M represents hydrogen, a metal cation or an ammonium cation, which may be substituted by one or more alkyl or substituted alkyl groups each having from 1 to 18 C atoms.

2. Monoazo dyes according to claim 1, wherein
M is as defined in claim 1;
R₁, R₂ independently represent hydrogen, methyl, methoxy or chloro;
R₃ represents hydrogen, alkyl with 1 to 6 C atoms, substituted alkyl with 2 or 3 C atoms, wherein the substituents are selected from the group consisting of cyano, carboxy and hydroxy;
and
D₁ represents n-alkylene with 2 or 3 C atoms, CH₂OCH₂ or CH=CH.

3. Monoazo dyes according to claim 2, wherein
M is as defined in claim 1;
R₁, R₂, D₁ are as defined in claim 2;
and
R₃ represents hydrogen, methyl, CH₂CH₂COOH or CH₂CH₂OH.

4. Monoazo dyes according to claim 3, wherein
M is as defined in claim 1;
R₁, R₂, D₁ are as defined in claim 2;
and
R₃ represents hydrogen.

5. Monoazo dyes of general formula (IV),
wherein
R₂ represents hydrogen, methyl, methoxy or chloro;
R₃ represents hydrogen, alkyl with 1 to 6 C atoms, substituted alkyl with 2 to 6 C atoms, wherein the substituents are selected from the group consisting of cyano, carboxy, hydroxy, carboxymethyl and carboxyethyl, or phenyl or phenyl substituted by methyl, chloro, bromo, carboxy or sulfo;
D₁ represents unsubstituted or substituted alkylene with 2 or 3 C atoms, wherein the substituents are selected from the group consisting of alkyl or alkenyl with 1 to 6 C atoms, fluoro, chloro and bromo, CH₂OCH₂ or CH=CH or where D₁ is part of an aliphatic ring consisting of 5 or 6 C atoms;
and
M represents hydrogen, a metal cation or an ammonium cation, which may be substituted by one or more alkyl or substituted alkyl groups each having from 1 to 18 C atoms.

6. Process for the preparation of monoazo dyes according to claim 1,
wherein,
in process (A),
a compound of general formula (V) 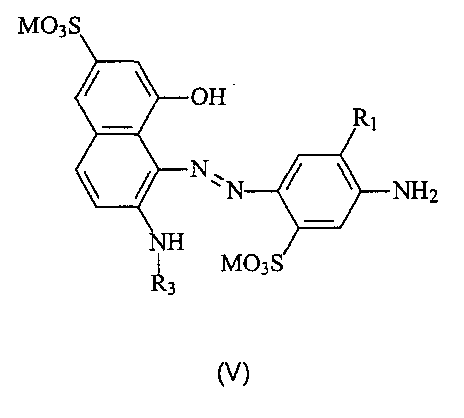 or (VI) 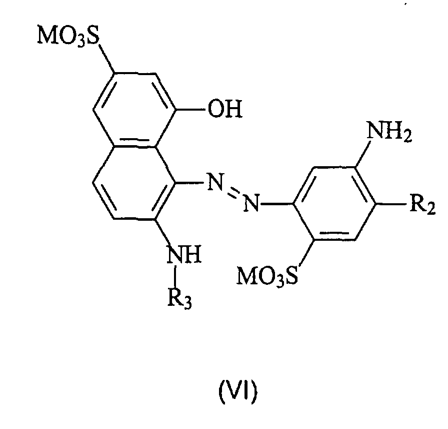 wherein R₁, R₂, R₃ and M are as defined in claim 1, is reacted with a compound of formula (VII), 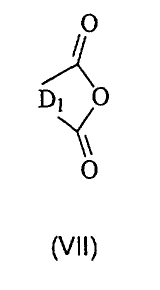 wherein D₁ is as defined in claim 1, under conditions that the cyclic anhydride of formula (VII) reacts with the amines of formulas (V) or (VI) under formation of the amide to the dyes of general formulas (III) or (IV) according to the invention;
or,
in process (B),
(i) a compound of general formula (VIII) 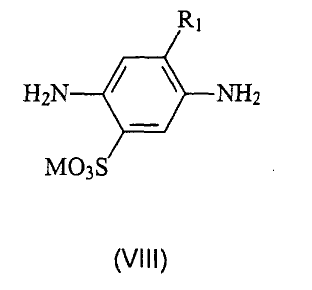 or (IX), 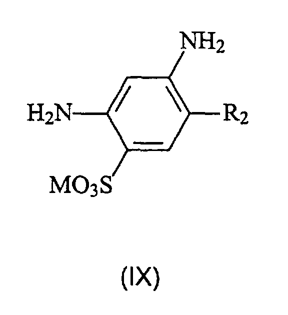 wherein R₁, R₂ and M are as defined in claim 1, is reacted with a compound of formula (VII), wherein D₁ is as defined in claim 1, under conditions that the amine selectively reacts in the para or meta position to the sulfo group with the cyclic anhydride of formula (VII) with the formation of the amides of formulas (X) or (XI) 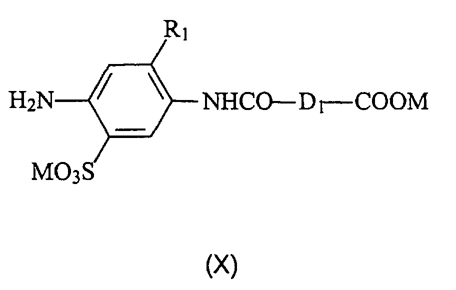 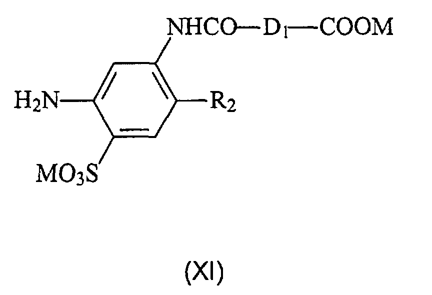 and
(ii) the anilines of formulas (X) and (XI) are diazotized and coupled with a compound of general formula (XII) 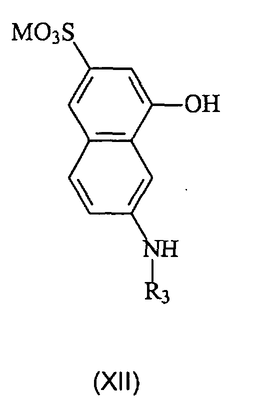 wherein R₃ is as defined in claim 1,
with the formation of the dyes of general formulas (III) and (IV).

7. Process for dyeing cellulose containing materials, paper, cotton, viscose, leather and wool by applying thereto a monoazo dye according to claim 1.

8. Liquid dye preparations comprising at least one monoazo dye or a mixture of monoazo dyes according to claim 1.

9. Inks for ink jet printing, comprising at least one monoazo dye or a mixture of monoazo dyes according to claim 1.

10. Inks for ink jet printing, comprising in addition to at least one monoazo dye or a mixture of monoazo dyes according to claim 1 one or more other dyes.

## Revendications

1. Colorants monoazoïques de formules générales (III) 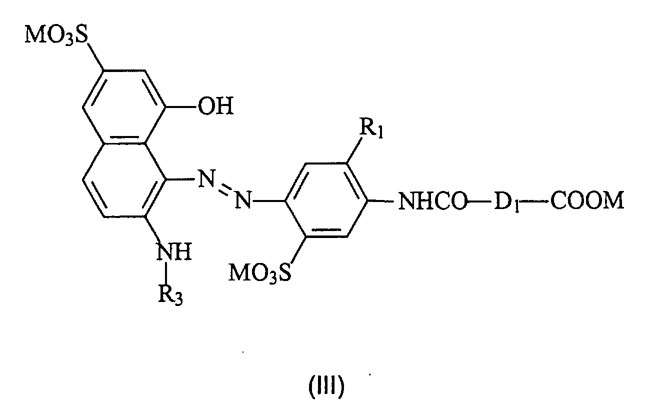 et (IV) 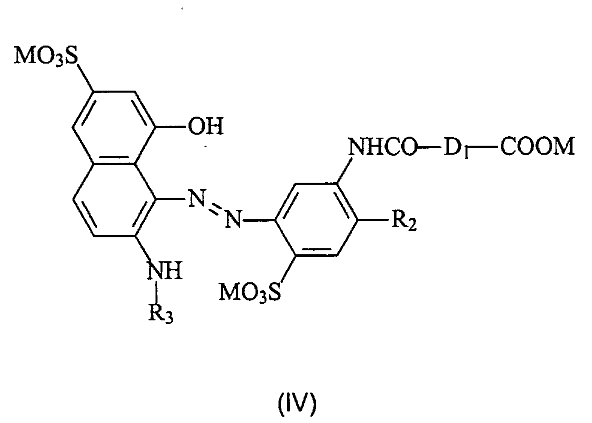 où
R₁, R₂ représentent indépendamment un atome d'hydrogène, un radical alkyle ou alcoxyle ayant chacun de 1 à 4 atomes de carbone, un atome de fluor, un atome de chlore ou un atome de brome;
R₃ représente un atome d'hydrogène, un radical alkyle ayant de 1 à 6 atomes de carbone, un radical alkyle substitué ayant de 2 à 6 atomes de carbone, dans lequel les substituants sont choisis parmi le groupe constitué du radical cyan, du radical carboxy, du radical hydroxy, du radical carboxyméthyle et du radical carboxy-éthyle, ou un radical phényle ou un radical phényle substitué par un groupe méthyle, un atome de chlore, un atome de brome, un groupe carboxy ou un groupe sulfo;
D₁ représente un radical alkylène non-substitué ou substitué ayant de 2 ou 3 atomes de carbone, dans lequel les substituants sont choisis parmi le groupe constitué du radical alkyle ou du radical alkènyle ayant de 1 à 6 atomes de carbone, ou d'un atome de fluor, d'un atome de chlore et d'un atome de brome, ou un radical CH₂OCH₂ ou un radical CH=CH, ou D₁ fait part d'un cycle aliphatique ayant 5 ou 6 atomes de carbone;
et
M représente un atome d'hydrogène, un cation métallique ou un cation ammonium optionnellement substitué par un plusieurs radicaux alkyle ou alkyle substitué ayant chacun de 1 à 18 atomes de carbone.

2. Colorants monoazoïques selon la revendication 1, dans lesquelles
M est défini comme à la revendication 1;
R₁, R₂ représentent indépendamment un atome d'hydrogène, un radical méthyle, un radical méthoxy ou un atome de chlore;
R₃ représente un atome d'hydrogène, un radical alkyle ayant de 1 à 6 atomes de carbone, un radical alkyle substitué ayant 2 ou 3 atomes de carbone, dans lequel les substituants sont choisis parmi le groupe constitué du radical cyan, du radical carboxy et du radical hydroxy;
et
D₁ représente un radical n-alkylène ayant 2 ou 3 atomes de carbone, un radical CH₂OCH₂ ou un radical CH=CH.

3. Colorants monoazoïques selon la revendication 2, dans lesquelles
M est défini comme à la revendication 1;
R₁, R₂, D₁ sont définis comme à la revendication 2;
et
R₃ représente un atome d'hydrogène, un radical méthyle, un radical CH₂CH₂COOH ou un radical CH₂CH₂OH.

4. Colorants monoazoïques selon la revendication 2, dans lesquelles
M est défini comme à la revendication 1;
R₁, R₂, D₁ sont définis comme à la revendication 2;
et
R₃ représente un atome d'hydrogène.

5. Colorants monoazoïques de formule générale (IV),
où
R₂ représente un atome d'hydrogène, un radical méthyle, un radical méthoxy ou un atome de chlore;
R₃ représente un atome d'hydrogène, un radical alkyle ayant de 1 à 6 atomes de carbone, un radical alkyle substitué ayant de 2 à 6 atomes de carbone, dans lequel les substituants sont choisis parmi le groupe constitué du radical cyan, du radical carboxy, du radical hydroxy, du radical carboxyméthyle et du radical carboxy-éthyle, ou un radical phényle ou un radical phényle substitué par un groupe méthyle, un atome de chlore, un atome de brome, un groupe carboxy ou un groupe sulfo;
D₁ représente un radical alkylène non-substitué ou substitué ayant 2 ou 3 atomes de carbone, dans lequel les substituants sont choisis parmi le groupe constitué du radical alkyle ou du radical alkènyle ayant de 1 à 6 atomes de carbone, ou d'un atome de fluor, d'un atome de chlore et d'un atome de brome, ou un radical CH₂OCH₂, ou D₁ fait part d'un cycle aliphatique ayant 5 ou 6 atomes de carbone;
et
M représente un atome d'hydrogène, un cation métallique ou un cation ammonium optionnellement substitué par un plusieurs radicaux alkyle ou alkyle substitué ayant chacun de 1 à 18 atomes de carbone.

6. Procédé de préparation des colorants monoazoïques selon la revendication 1,
où,
dans le procédé (A),
on fait réagir un composé de formule générale (V) 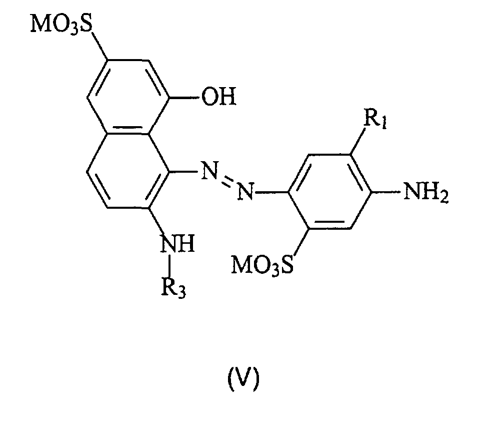 ou (VI) 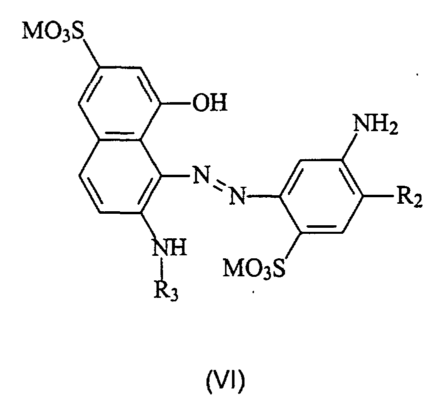 dans lesquelles R₁, R₂, R₃ et M sont définis comme à la revendication 1, avec un composé de formule (VII), 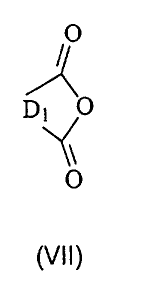 dans laquelle D₁ est défini comme à la revendication 1,
dans des conditions telles que l'anhydride cyclique de formule (VII) réagisse avec les amines de couleur de formules (V) ou (VI) en formant les colorants (amides) selon l'invention de formules (III) ou (IV);
ou,
dans le procédé (B),
(i) on fait réagir un composé de formule générale (VIII) 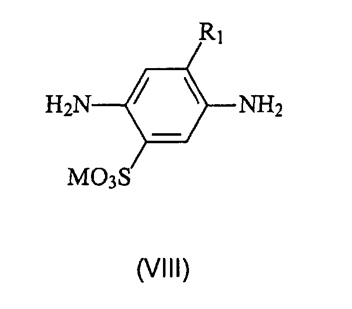 ou (IX), 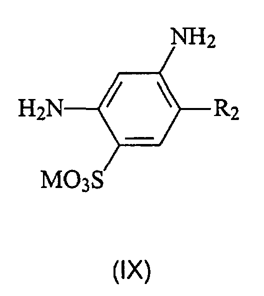 dans lesquelles R₁, R₂ et M sont définis comme à la revendication 1, avec un composé de formule (VII),
dans laquelle D₁ est défini comme à la revendication 1,
dans des conditions telles que l'amine réagisse sélectivement en position para ou meta au groupe sulfo avec l'anhydride cyclique de formule (VII) en formant les amides de formules (X) ou (XI) 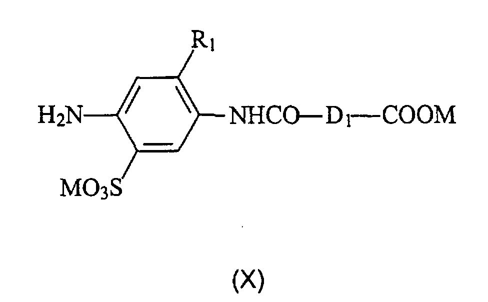 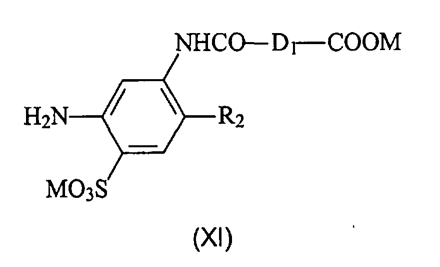 et
(ii)les colorants de formules générales (III) et (IV) sont formés par diazotation et copulation des anilines de formules (X) et (XI) avec un composé de formule générale (XII) 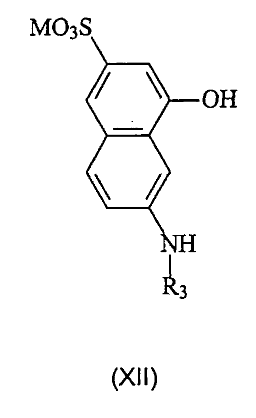 dans laquelle R₃ est défini comme à la revendication 1.

7. Utilisation des colorants monoazoïques selon une ou plusieurs des revendications 1 à 5 pour la teinture des matériaux cellulosiques, du papier, du coton, de la viscose, du cuir et de la laine.

8. Préparations liquides contenant au moins un colorant ou un mélange de colorants selon une ou plusieurs des revendications 1 à 5.

9. Encres d'impression selon la méthode du jet d'encre qui comprennent au moins un colorant ou un mélange de colorants selon une ou plusieurs des revendications 1 à 5.

10. Encres d'impression selon la méthode du jet d'encre qui comprennent, à coté d'au moins un colorant ou un mélange de colorants selon une ou plusieurs des revendications 1 à 5 un ou plusieurs colorants supplémentaires.
